# EUROPÄISCHE PATENTSCHRIFT

(11) **EP 0 650 672 B1**
(45) Veröffentlichungstag und Bekanntmachung des Hinweises auf die Patenterteilung: **21.01.1998**
(21) Anmeldenummer: 94250264.2
(22) Anmeldetag: 31.10.1994
(51) Int. Cl.: A41G 3/00

(54) **Vorrichtung zur Verlängerung von menschlichem Haar**
Apparatus for human hair extension
Dispositif pour prolonger la longueur des cheveux humains

(30) Priorität: 31.10.1993 DE 4337538; 09.03.1994 DE 4408634
(43) Veröffentlichungstag der Anmeldung: 03.05.1995
(73) Patentinhaber: Dortez, Carlyle L., D-10787 Berlin (DE)
(72) Erfinder: Dortez, Carlyle L., D-10787 Berlin (DE)
(74) Vertreter: Christiansen, Henning, Dipl.-Ing.

(56) Entgegenhaltungen:
- FR-A- 1 379 083
- US-A- 3 642 010
- US-A- 4 426 567
- US-A- 4 982 748
- US-A- 5 072 745

## Beschreibung

Die Erfindung betrifft eine Haarverlängerungsvorrichtung.

Ein Verfahren zur Verlängerung von Haar ohne nähere Beschreibung einer entsprechenden Vorrichtung ist aus der WO 93/06755 bekannt.

Aus der US-A-4 982 748 ist eine Methode zum Verlängern menschlicher Haare bekannt. Hierbei wird eine Vorrichtung benutzt, welche zuvor durch Flechten mit zusätzlichem Haar verbundene Abschnitte des zu verlängernden Haares zwischen stabförmig ausgebildeten Elementen an der Verbindungsstelle mechanisch verdichtet und gleichzeitig einer Wärmeeinwirkung unterzogen wird. Dadurch soll eine feste Verbindung zwischen den Haarteilen erzeugt werden.

Die bei dem vorstehend beschriebenen Verfahren benutzte Vorrichtung weist den Nachteil auf, daß nur eine Nachbehandlung von bereits durch einen vorangegangenen Flechtvorgang verbundene Haarkomponenten vorgenommen werden kann, um an der Verbindungsstelle eine zusätzliche Festigkeitserhöhung der Verbindung zu ereichen. Es kommt als zusätzlicher Nachteil hinzu, daß die Handhabbarkeit der stabförmigen Elemente erheblich durch die Wulstigkeit an der Haarverbindungsstelle erschwert wird, da die verbundenen Haarkomponenten in einem relativ engen Spalt zwischen den Elementen positioniert werden müssen. Letztlich ist ein Verbinden einzelner Haare mit der vorab beschriebenen Vorrichtung nicht oder nur mit Schwierigkeiten möglich.

Ein etwa aus FR-A-1 379 083 bekannter Ondulierstab weist mit Andruckflächen und Griffstücken versehene Stabelemente zum Halten von Haar auf, welche in einer senkrecht auf der Ebene der Erstreckung der Andruckflächen stehenden Richtung aufeinander zu bewegbar geführt und über eine gemeinsame Drehachse miteinander in Form einer Zange oder Schere verbunden sind, wobei zwischen den Griffstücken ein federndes Element vorgesehen ist. Dieses hält die Andruckflächen mit dem dazwischen befindlichen, zu ondulierenden Haar solange in innigem Kontakt, bis sie durch manuellen Druck auf die Griffstücke voneinander getrennt werden.

Aus US-A-4 426 567 ist eine Brennschere mit ähnlichen Stabalementen bekannt, bei der jedoch kein federndes Element vorgesehen ist.

Ausgehend von den Mängeln des Standes der Technik liegt der Erfindung die Aufgabe zugrunde, eine Vorrichtung der eingangs genannten Gattung zu schaffen, durch welche bei bequemer Handhabbarkeit einzelne Haare und/oder aus einzelnen Haaren bestehende Haarsträhnen mit zusätzlichen Haarelementen dauerhaft verbindbar sind.

Diese Aufgabe wird mit den Merkmalen des Anspruchs 1 gelöst.

Die Erfindung schließt die Erkenntnis ein, daß bei einer Vorrichtung zum verlängern von Haaren, wobei die Kontaktierung der zu verbindenden Haare zwischen den freien Enden zweier Elemente vorgenommen wird, eine wesentliche Erleichterung bei der Handhabung der Vorrichtung insbesondere dann gewährleistet ist, wenn die im wesentlichen stabförmig ausgebildeten Elemente in einem Bereich miteinander verbunden sind und um diesen Bereich herum gegeneinander geschwenkt werden können, bis sich die freien Enden der Elemente berühren. Der Bereich kann entweder aus einem Drehlager oder aber einer festen Verbindung bestehen, wobei dann die notwendige Relativbewegung der das Haar ergreifenden Elemente dann durch die Elastizität der die Elemente tragenden Schenkel erzeugbar ist.

Bei der Erfindung besteht insbesondere der Vorteil, daß die Vorrichtung manuell sicher geführt werden kann, wobei mit der Führung auch der Arbeitsbereich und der Anpreßdruck genau dosiert wählbar ist, was insbesondere bei der Verbindung von Haarteilen von großer Bedeutung ist. Hierbei bedarf es einer sicheren Hand und genauen Führung, da sonst keine präzisen Verbindungen bewirkt werden können.

Insbesondere ist die Vorrichtung zum Befestigen von natürlichen Haaren auch jeweils an nur einem einzelnen Haar im Bereich der Kopfhaut geeignet.

Entsprechend der bevorzugten Ausführungsform der Erfindung weist die Vorrichtung zwei im wesentlichen stabförmige Elemente auf, welche zangen- oder scherenartig ausgebildet und in einem gemeinsamen Drehpunkt miteinander verbunden sind. Durch die Wahl der Lage des gemeinsamen Drehpunktes kann die Größe der Schwenkbewegung der paarweise einander zugeordneten freien Enden der Elemente festgelegt werden. Ein erstes Paar der freien Enden ist für die Kontaktierung der zu verbindenden Haare vorgesehen und das zweite Paar der freien Enden sind als Griffstücke ausgebildet, über welche die Schwenkbewegung des zweiten Endenpaares koordiniert werden kann. Die der Kontaktierung der zu verbindenden Haare dienenden freien Enden sind jeweils in günstiger Weise unter Bildung einer im wesentlichen eben ausgebildeten Fläche vergrößert. Durch die Schwenkbewegung werden die Flächen des zweiten Endenpaares aufeinander zu bewegt und liegen am Ende der Schwenkbewegung plan aneinander. Die flächenhafte Ausbildung der Enden der Elemente gewährleistet auf vorteilhafte Weise, daß die zu verbindenden Haarabschnitte in dem verbleibenden Freiraum zwischen den Enden der Elemente in geeigneter Weise positioniert werden können, bevor die Haarabschnitte bei aneinanderliegenden Endflächen kontaktiert werden.

Die Verbindung der Haare erfolgt unter Verwendung eines thermoplastischen Klebstoffes, welcher an mindestens einer der Flächen bereitgestellt wird, bevor die zu verbindenden Haare mit entsprechend gewählten Abschnitten in den Freiraum zwischen den schwenkbaren, freien Enden eingebracht werden. Um die Wirksamkeit des Kleber voll nutzen zu können, ist eines der schwenkbar angeordneten Elemente der erfindungsgemäßen Vorrichtung beheizbar ausgebildet. Hierbei ein Element in Form eines elektrischen Lötkolbens besonders günstig. Der thermoplastische Kleber liegt vorteilhafter Weise in Tablettenform vor und kann dadurch mittels der schwenkbaren Enden der Vorrichtung bequem aufgenommen werden. Die über eines der schenkbaren Enden zugeführte Wärmemenge bringt den Kleber zum Schmelzen, wodurch bei aufeinanderliegenden Flächen beide von dem Kleber benetzt werden. Die anschließend zwischen dem mit Kleber benetzten Flächenpaar der schwenkbaren Enden einzubringenden Haarenden werden durch erneutes Zusammenführen der Flächen auf vorteilhafte Weise durch den Wärmeeinfluß und die Wirkung des Klebers miteinander verbunden.

Entsprechend einer günstigen Weiterbildung der Erfindung weist mindestens einer der flächenförmig vergrößerten Enden der schwenkbaren Elemente eine zur Flächenebene hin geöffnete Ausnehmung auf, welche in Form und Größe der Tablettierung des thermoplastischen Klebers entspricht. Die flächige Erweiterung der freien Enden der schwenkbaren Elemente dient der Lagefixierung der einzelnen Haare bzw. Haarsträhnen, bevor die Enden dieser Elemente nach Aufschmelzen des Klebers erneut zusammengeführt werden. Um die nach Betätigen der Griffstücke durch eine Schwenkbewegung zusammengeführten Enden ohne besondere Mühe wieder voneinander zu trennen, ist zwischen den Griffstücken ein federndes Element vorgesehen, welches je nach Bedarf bei Entlasten der Griffstücke die Ausgangsposition der Elemente einstellt. Die Verwendung einer Torsionsfeder mit einer Federkonstanten geeigneter Größe ist hierbei günstig.

Die Zuführung des thermoplastischen Klebers erfolgt nach einer anderen vorteilhaften Weiterbildung der Erfindung aus einem geeignet ausgebildeten Vorratsbehälter, welcher an einem der schwenkbaren Elemente der Vorrichtung zwischen deren gemeinsamen Drehpunkt und den flächenhaft erweiterten Ende vorgesehen ist. Über eine Verbindungsleitung wird der Kleber von dem Vorratsbehälter zu der entsprechenden Andruckfläche geführt.

Bei einer anderen vorteilhaft ausgestalteten Ausführung dient ein nach oben offener Vorratsbehälter als Reservoir für das durch Beheizung flüssig gehaltene Klebemittel. Ebenso wie bei der Vorrichtung selbst ist hier eine Thermostatisierung durch einen geeigneten Regelkreis günstig, bei dem ein Temperaturmeßfühler im Bereich der Andruckfläche bzw. des Klebstoffvorrats vorgesehen ist, der eine Beheizung bei auslöst, wenn die Klebstofftemperatur auf einen unterhalb eines oberhalb der Schmelztemperatur gelegenen Wert abgesunken ist.

Entsprechend einer anderen günstigen Ausführungsform der Erfindung sind die schwenkbaren Elemente der Vorrichtung pinzettenartig in einem gemeinsamen Punkt verbunden. Die Elemente weisen jeweils an ihrem freien Ende einen ebenen Flächenabschnitt auf, welche am Ende eines Schwenkvorgangs in einer Ebene aufeinanderliegen, wobei in dieser Position zwischen ihnen die Verbindung der Haare unter Verwendung eines Klebers bei Wärmeeinwirkung hergestellt wird. Um die Elemente der Vorrichtung nach erfolgter Haarverbindung erneut in ihre Ausgangsposition zu verbringen, ist es erforderlich, daß die im wesentlichen stabförmig ausgebildeten Elemente eine bestimmte Elastizität aufweisen. Diese Elastizität ist zumindest an den Endabschnitten der Elemente erforderlich, welche in einem gemeinsamen Punkt verbunden sind.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 eine erste bevorzugte Ausführungsform der Erfindung Seitenansicht,
Figur 2 eine andere vorteilhafte Ausführungsform der Erfindung in schematisierter Darstellung,
Figur 3 eine vergrößerte Darstellung eines Details der in den Figuren 1 und 2 gezeigten Erfindung sowie
Figur 4 eine günstige Weiterbildung der in der Figur 1 gezeigten Erfindung in schematisierter Darstellung.

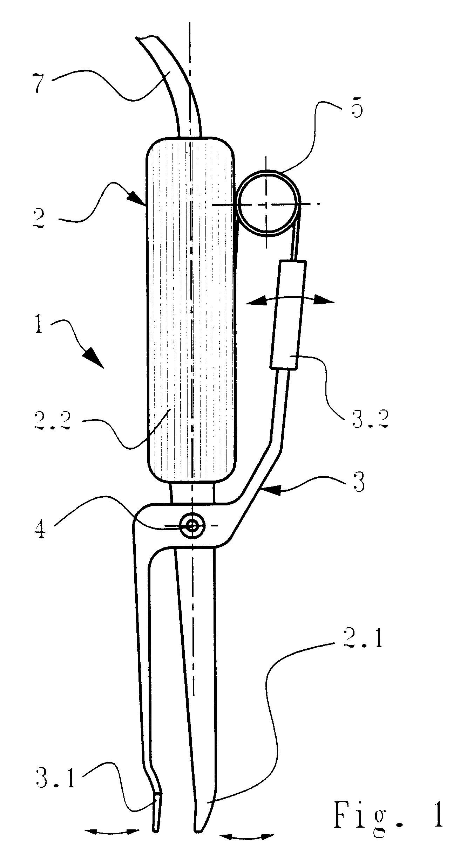

Die in Figur 1 dargestellte Vorrichtung 1 zum Verlängern eines menschlichen Haars mit einem Haarteil durch Verbinden mit einem heißschmelzenden Klebemittel, weist zwei über Betätigungselemente sich gegenseitig berührende und mit aneinander anpreßbaren Kontaktflächen versehene Elemente auf, zwischen denen ein Verbinden der Enden von Haar und Haarteil unter Aufschmelzen einer Menge des Klebemittels und anschließendem Verkleben von Haar und Haarteil erfolgt.

Insbesondere ist die Vorrichtung 1 mit zwei im wesentlichen stabförmigen Elementen 2 und 3 versehen, welche in einem gemeinsamen Drehpunkt 4 miteinander in Form einer Zange oder einer Schere verbunden sind. Das stabförmige Element 2 ist beheizbar in Form eines elektrischen Lötkolbens mit einer Leitungsverbindung 7 ausgebildet. Der Griff 2.2 des eine Heizpatrone nach Art eines elektrischen Lötkolbens aufweisenden Elements 2 ist mit einem als Griffstück 3.2 ausgebildeten Ende des Elements 3 über ein Federelement 5 elastisch verbunden. Das Federelement 5 ist als Torsionsfeder ausgebildet und gewährleistet ein Zurückführen der Elemente 2 und 3 der Vorrichtung 1 in ihre in Figur 1 dargestellte Ausgangsposition, wenn eine Verlängerung von Haaren durch Verbinden ihrer Enden vorgenommen worden ist. Insgesamt bestehen die zangenförmigen Elemente aus einem sich von einem Griffteil bis zu einem erwärmbaren Element im wesentlichen geradlinig erstreckenden ersten Teil und einem diesem gegenüber in einem mittleren Bereich des ersten Teils schwenkbar gelagerten nicht mit einer Heizvorrichtung versehenen zweiten Teil, wobei der zweite Teil zwei sich im wesentlichen in gerader Richtung parallel zu dem ersten Teil erstreckenden Teilen aufweist, die im Bereich des Schwenklagers mittels einer den ersten Teil kreuzenden Brücke verbunden.

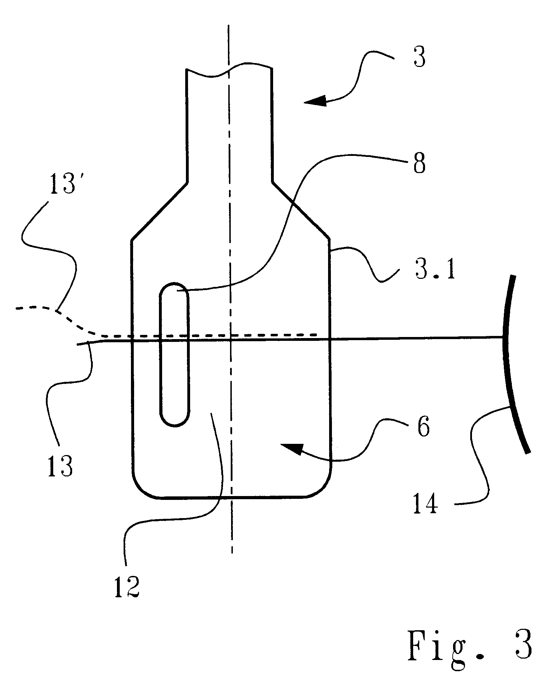

Die möglichen Bewegungen der Elemente sind durch Pfeile symbolisch dargestellt. Das Verbinden der Haarabschnitte erfolgt zwischen den freien Enden 2.1 und 3.1 der Elemente 2 und 3, wobei die zu verbindenden Haare oder Haarsträhnen (vergleiche Position 13 gemäß Figur 3) im wesentlichen senkrecht zur Längsachse der Vorrichtung 1 in den zwischen den freien Enden 2.1, 3.1 befindlichen Freiraum verbracht worden sind. Die freien Enden 2.1, 3.1 sind insbesondere plättchenartig erweitert und weisen an ihren Innenseiten Andruckflächen auf, welche flächig aneinander anliegen, wenn die Elemente in ihre Endstellung gelangt sind. Das Verbinden der Haarabschnitte erfolgt unter Verwendung eines thermoplastischen Klebers, welcher durch den Wärmeeintrag über die Heizpatrone verflüssigt wird, die betreffenden Haarabschnitte einhüllt, sich nach Rückschwenken der freien Enden 2.1 und 3.1 in die Ausgangsposition erneut verfestigt und dadurch die einzelnen Haare zum Zwecke der Haarverlängerung dauerhaft verbindet.

Die Verbindung der Haare erfolgt dabei stets derart, daß das zu verlängernde Haar im kopfnahen Bereich mit dem zusätzlichen Haar verbunden wird. Die beiden Haare werden unter Beachtung der gleichen Wuchsrichtung verbunden. Im Bedarfsfall ist es erforderlich, die mit dem Kleber benetzten Haarabschnitte zusätzlich manuell zu bearbeiten.

Die schwenkbaren Elemente 2, 3 sind - wie erläutert - an ihren Enden 2.1, 3.1 flächenhaft erweitert und weisen auf den jeweils einander zugewandten Seiten eine im wesentlichen ebene Fläche auf. Diese Flächen liegen am Ende des Schwenkvorganges in einer Ebene aufeinander, so daß die Verteilung des Klebers in günstiger Weise gleichmäßig erfolgt und Klebstellen mit nur relativ geringer Dicke entstehen.

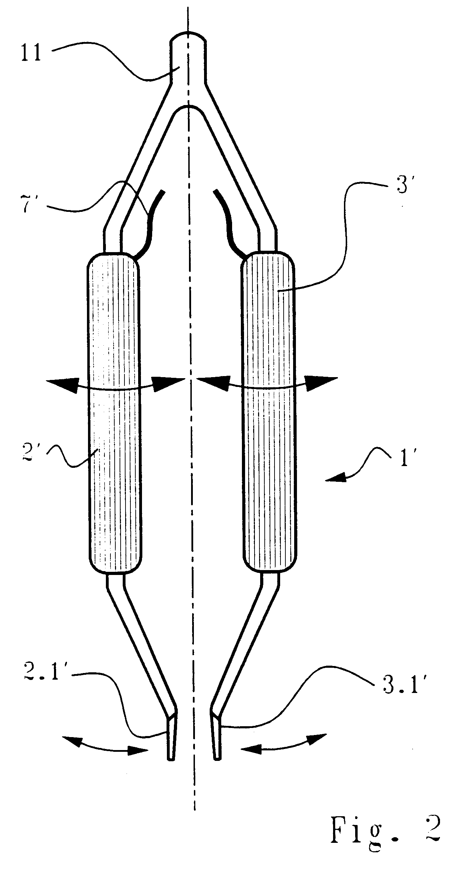

Die in Figur 2 dargestellte Ausführung der Erfindung zeigt zwei gegeneinander schwenkbare Elemente 2' und 3', die in Form einer Pinzette 1' mit jeweils einem ihrer Enden in einem Punkt 11 miteinander verbunden sind. Beide Elemente 2' und 3' sind ebenfalls in Form von Heizpatronen mit einem umgebenden Griffteil nach Art von elektrische Lötkolben ausgebildet und weisen jeweils eine Anschlußleitung 7' auf. Die freien Enden 2.1' und 3.1' sind gleichartig ausgebildet und weisen an den einander gegenüberliegenden Seiten eine ebene Fläche auf. Die Verbindung der Haarenden zur Verlängerung der Haare wird entsprechend den Erläuterungen zu Figur 1 durchgeführt. Die Verwendung von zwei beheizten, schwenkbaren Elementen bewirkt - ungeachtet des fertigungstechnischen Vorteils - in günstiger Weise eine gleichmäßige Durchwärmung des Bereichs, in welchem die Verbindung der Haarabschnitte erfolgt. Die möglichen Bewegungsabläufe der schwenkbaren Elemente sind durch Pfeile symbolisch dargestellt.

Figur 3 zeigt als Detail der in den Figuren 1 und 2 schematisiert dargestellten Vorrichtungen 1, 1' ein flächenmäßig erweitertes freies Ende 3.1 des Elements 3 mit Blick auf dessen Innenseite. Das zu verlängernde Haar 13 und das mit diesem zu verbindende Verlängerungshaar 13' können bequem auf der ebenen Fläche 6 am Ende des Elements 3 - im wesentlichen quer zu dessen Längsachse - positioniert werden. Die Haarverbindung erfolgt vorzugsweise im kopfnahen Bereich (Kopfhaut 14) des zu verlängernden Haars 13. Die im wesentlichen quaderförmig ausgebildete Ausnehmung 8 dient zur kurzfristigen Zwischenlagerung eines (nicht dargestellten) thermoplastischen Klebers, der für das Verbinden der Haarenden verwendet wird. Der Kleber liegt in tablettierter oder gekörnter Form vor und wird mit der zangen-, scheren- oder pinzettenartigen Vorrichtung 1, 1' aus einem Vorratsbehältnis aufgenommen und in der Ausnehmung 8 positioniert.

Während eines kurzfristigen Zusammenführens der freien Enden der Elemente wird der Kleber soweit erwärmt, daß er sich in den Ausnehmungen 12 der Profilierung gleichmäßig verteilt. Anschließend werden die Haarenden 13 in der dargestellten Weise positioniert und die freien Enden erneut kurzzeitig durch Schwenken zusammengeführt, so daß der Kleber die zu verbindenden Haarenden gleichmäßig umhüllt. Die Oberfläche 6 des schwenkbaren freien Endes 3.1 ist derart behandelt, beispilesweise beschichtet, so daß der Kleber nicht an ihr haften kann und die "Entnahme" der verlängerten Haare ohne Probleme möglich ist. Um die aufnehmbare Klebermenge hinreichend zu begrenzen, ist die Ausnehmung 8 flächenmäßig klein gegenüber der Fläche 6.

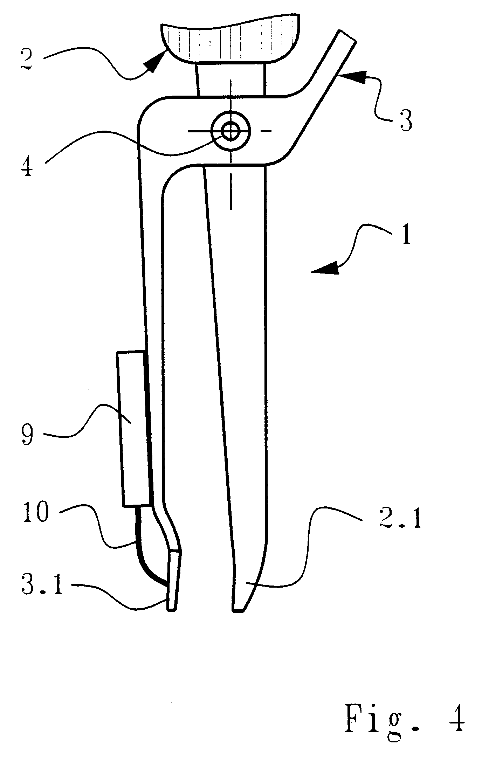

In Figur 4 ist eine günstige Weiterbildung der in Figur 1 gezeigten Vorrichtung 1 in schematisierter Form dargestellt. Um den benötigten Kleber ohne zusätzlichen Arbeitsgang zur Verfügung zu haben, ist an einem der freien Enden der schwenkbaren Elemente 2, 3 ein Vorratsbehälter 9 geeigneter Größe vorgesehen. Der Kleber gelangt über eine Versorgungsleitung 10 direkt auf die Innenseite des freien Endes 3.1 und kann dort in der vorab beschriebenen Art und Weise zur Verbindung der Haare verwendet werden. Hierbei ist es von besonderem Vorteil, wenn der Austrag des Klebers über die Schwenkbewegung der Elemente 2, 3 der Vorrichtung 1 gesteuert wird.

Bei einer anderen - in den Figuren nicht dargestellten - Ausführung dient ein nach oben offener Vorratsbehälter als Reservoir für das durch Beheizung flüssig gehaltene Klebemittel. Ebenso wie bei der Vorrichtung selbst ist hier eine Thermostatisierung durch einen geeigneten Regelkreis günstig, bei dem ein Temperaturmeßfühler im Bereich der Andruckfläche bzw. des Klebstoffvorrats vorgesehen ist, der eine Beheizung auslöst, wenn die Klebstofftemperatur auf einen unterhalb eines oberhalb der Schmelztemperatur gelegenen Wert abgesunken ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Vorrichtung zur Verlängerung von menschlichem Haar durch Anfügen eines Haarteils mittels eines sich in heißem Zustand verflüssigenden Klebemittels an natürliches Haar,
die mit Andruckflächen (6; 2.1, 3.1; 2.1', 3.1') und Griffstücken (2.2, 3.2) versehene Stabelemente (2, 3; 2', 3') zum Halten des anzufügenden Haarteils und des zu verlängernden Haars und zum In-Kontakt-Bringen mit dem verflüssigten Klebemittel aufweist, welche in einer senkrecht auf der Ebene der Erstreckung der Andruckflächen stehenden Richtung aufeinander zu bewegbar geführt sind und von denen mindestens eines eine Heizvorrichtung aufweist,
wobei die Stabelemente (2, 3) über eine gemeinsame Drehachse (4) miteinander in Form einer Zange oder Schere verbunden sind und zwischen den Griffstücken ein federndes Element (5) vorgesehen ist, oder
wobei die Stabelemente (2', 3') an ihren den Andruckflächen abgewandten Enden pinzettenartig in einem Punkt (11) miteinander elastisch verbunden sind und zumindest an diesen Enden eine bestimmte Elastizität aufweisen,
derart, daß die Andruckflächen durch manuellen Druck auf die Griffstücke aufeinander zu bewegbar sind und bei Entlastung der Griffstücke voneinander getrennt werden.

2. Vorrichtung nach Anspruch 1, **dadurch gekennzeichnet**, daß eine elektrische Heizvorrichtung vorgesehen ist.

3. Vorrichtung nach Anspruch 2 oder 3, **dadurch gekennzeichnet**, daß die Andruckflächen (6; 2.1, 3.1; 2.1', 3.1') derart angeordnet sind, daß sie am Ende der aufeinander zu gerichteten Schwenkbewegung der Stabelemente (2, 3; 2', 3') dicht benachbart aufeinanderliegen.

4. Vorrichtung nach Anspruch 1, **dadurch gekennzeichnet**, daß die scheren- oder zangenförmig verbundenen Stabelemente aus einem sich von einem Griffteil (2.2) zu einem erwärmbaren Element (2.1) im wesentlichen geradlinigen ersten Teil (2) und einem diesem gegenüber in einem mittleren Bereich des ersten Teils schwenkbar gelagerten, nicht mit einer Heizvorrichtung versehenen zweiten Teil (3) bestehen, wobei das zweite Teil zwei sich im wesentlichen in gerader Richtung parallel zu dem ersten Teil erstreckende Teile aufweist, die im Bereich der Drehachse (4) mittels einer das erste Teil (2) kreuzenden Brücke verbunden sind.

5. Vorrichtung nach einem der vorangehenden Ansprüche, **dadurch gekennzeichnet**, daß das federnde Element zwischen den Griffstücken der in Form einer Zange oder Schere verbundenen Teile eine Druckfeder (5) ist.

6. Vorrichtung nach einem der vorangehenden Ansprüche, **dadurch gekennzeichnet**, daß innerhalb der Andruckflächen (6) jeweils eine, insbesondere rinnenförmige, Ausnehmung (8) vorgesehen ist.

7. Vorrichtung nach einem der vorangehenden Ansprüche, **dadurch gekennzeichnet**, daß ein Vorratsbehälter (9) für das Klebemittel an einem der Stabelemente (3) vorgesehen ist, der eine zur Andruckfläche (3.1) hin weisende Ausströmöffnung oder einen Ausströmkanal (10) aufweist.

8. Vorrichtung nach Anspruch 7, **dadurch gekennzeichnet**, daß der Ausströmkanal (10) in der Ausnehmung (8) auf der Andruckfläche (3.1) endet.

9. Vorrichtung nach Anspruch 8, **dadurch gekennzeichnet**, daß der Austrag des Klebemittels durch die Schwenkbewegung der Stabelemente (2, 3; 2', 3') gesteuert erfolgt.

10. Vorrichtung nach einem der Ansprüche 1 bis 6, **dadurch gekennzeichnet**, daß ein separates beheizbares Gefäß als Vorratsbehälter für das Klebemittel vorgesehen ist

11. Vorrichtung nach einem der Ansprüche 2 bis 10, **dadurch gekennzeichnet**, daß die Heizvorrichtung durch ein Heizelement gebildet ist, wie es bei einem Lötkolben verwendet wird.

12. Vorrichtung nach einem der vorangehenden Ansprüche, **dadurch gekennzeichnet**, daß ein Regler mit einem im Bereich der Andruckflächen angebrachten Temperatursensor zur Einhaltung einer vorbestimmten Temperatur der Andruckflächen (6; 2.1; 3.1; 2.1', 3.1') oder des beheizbaren Gefäßes (9) vorgesehen ist.

## Claims

1. A device for lengthening human hair by addition of a length of hair to natural hair by means of an adhesive which is fluid when hot,
having rod elements (2, 3; 2', 3') which have pressing surfaces (6; 2.1, 3.1; 2.1', 3.1') and grips (2.2, 3.2) for holding the hair piece which is to be attached and the hair to be lengthened and for bringing it into contact with the liquefied adhesive, which are guided towards each other in a vertical direction on the plane of extension of the pressing surfaces, and of which at least one has a means of heating,
wherein the rod elements (2, 3) are connected via a common pivoting axis (4) in the form of a pair of pliers or scissors, a spring element (5) being disposed between the grips, or
wherein the rod elements (2', 3') are elastically connected like a pair of tweezers at a point (11) on the ends facing away from the pressing surfaces, and having a degree of elasticity at least at these ends,
in such a way that the pressing surfaces can be moved towards one another by manual force applied to the grips, separating again when the pressure on the grips is released.

2. A device according to claim 1, characterised in that an electrical means of heating is provided.

3. A device according to claim 1 or 2, characterised in that the pressing surfaces (6; 2.1, 3.1; 2.1', 3.1') are disposed in such a way that they lie closely on top of one another at the end of the swinging movement of the rod elements (2, 3; 2', 3').

4. A device according to claim 1, characterised in that the scissor or pliers-shaped connected rod elements consist of a substantially linear first part (2), from a grip (2.2) to a heatable element (2.1) and a non-heated second part (3)pivoting in the middle region opposite the first part, wherein the second part has two parts which extend in a substantially straight line parallel to the first part which are connected by a bridge crossing the first part (2) in the region of the pivoting axis (4).

5. A device according to one of the preceding claims, characterised in that the spring element between the grips of the parts which are connected like pliers or scissors is a compression spring (5).

6. A device according to one of the preceding claims, characterised in that in each case, a recess (8), especially groove-like, is provided within the pressing surfaces (6).

7. A device according to one of the preceding claims, characterised in that a storage container (9) is provided for the adhesive on one of the rod elements (3), which has an outlet opening or channel (10) facing the pressing surface (3.1).

8. A device according to claim 7, characterised in that the outlet channel (10) ends in the recess (8) on the pressing surface (3.1).

9. A device according to claim 8, characterised in that the release of adhesive is controlled by the swinging movement of the rod elements (2, 3; 2', 3').

10. A device according to claims 1 to 6, characterised in that a separate heatable container is provided as a storage container for the adhesive.

11. A device according to one of claims 2 to 10, characterised in that the means of heating comprises a heating element of a similar type to that used in a soldering iron.

12. A device according to one of the preceding claims, characterised in that a controller with a temperature sensor in the area of the pressing surfaces is provided to maintain a specified temperature at the pressing surfaces (6; 2.1, 3.1; 2.1', 3.1') or the heatable container (9).

## Revendications

1. Dispositif pour prolonger des cheveux humains en adjoignant une partie de cheveu à un cheveu naturel au moyen d'une substance collante qui se liquéfie à l'état chaud,
ledit dispositif comportant des éléments de tige (2, 3 ; 2', 3') dotés de surfaces de pressage (6 ; 2.1, 3.1 ; 2.1', 3.1') et d'éléments de saisie (2.2, 3.2) afin de tenir la partie de cheveu ajoutée et le cheveu à prolonger, et de les amener en contact avec la substance collante liquéfiée, lesdits éléments de tige étant guidés de façon mobile l'un vers l'autre dans une direction perpendiculaire au plan d'extension des surfaces de pressage et l'un au moins desdits éléments de tige comportant un dispositif de chauffage,
dans lequel les éléments de tige (2, 3) sont reliés l'un à l'autre via un axe de rotation commun (4), à la manière d'une pince ou de ciseaux, et un élément de ressort (5) est prévu entre les éléments de saisie, ou
dans lequel les éléments de tige (2', 3') sont reliés l'un à l'autre de façon élastique à leurs extrémités détournées des surfaces de pressage à la manière de pincettes et en un point, et présentent au moins à ces extrémités une certaine élasticité,
de telle sorte que les surfaces de pressage peuvent être déplacées l'une vers l'autre par pression manuelle sur les éléments de saisie, et sont séparées l'une de l'autre lorsqu'on décharge les éléments de saisie.

2. Dispositif selon la revendication 1, caractérisé en ce qu'il est prévu un dispositif de chauffage électrique.

3. Dispositif selon l'une ou l'autre des revendications 2 et 3, caractérisé en ce que les surfaces de pressage (6 ; 2.1, 3.1 ; 2.1', 3.1') sont agencées de telle manière qu'elles sont l'une au-dessus de l'autre et de façon étroitement voisine à l'extrémité du mouvement de basculement des éléments de tige (2, 3 ; 2', 3') dirigés l'un vers l'autre.

4. Dispositif selon la revendication 1, caractérisé en ce que les éléments de tiges reliés à la manière de ciseaux ou de pinces sont constitués par une première partie (2) sensiblement rectiligne depuis une partie de saisie (2.2) jusqu'à un élément (2.1) chauffable, et par une seconde partie (3) qui n'est pas dotée d'un dispositif de chauffage et disposée en basculement par rapport à cette première partie dans une première région de la première partie, ladite seconde partie présentant deux morceaux qui s'étendent sensiblement en direction rectiligne parallèlement à la première partie, lesquels sont reliés dans la région de l'axe de rotation (4) au moyen d'un pont qui croise la première partie (2).

5. Dispositif selon l'une des revendications précédentes, caractérisé en ce que l'élément élastique entre les parties de saisie des éléments reliés à la manière de pince ou de ciseaux est un ressort de compression (5).

6. Dispositif selon l'une des revendications précédentes, caractérisé en ce qu'à l'intérieur des surfaces de pressage (6) est prévu un évidement respectif (8), en particulier en forme de goulotte.

7. Dispositif selon l'une des revendications précédentes, caractérisé en ce qu'il est prévu un réservoir de réserve (9) pour la substance collante sur l'un des éléments de tige (3), lequel présente une ouverture ou un canal de sortie (10) orienté vers la surface de pressage (3.1).

8. Dispositif selon la revendication 7, caractérisé en ce que le canal de sortie (10) se termine dans l'évidement (8) sur la surface de pressage (3.1).

9. Dispositif selon la revendication 8, caractérisé en ce que la distribution de la substance collante est commandée par le déplacement de basculement des éléments de tige (2, 3 ; 2', 3').

10. Dispositif selon l'une des revendications 1 à 6, caractérisé en ce qu'il est prévu un récipient chauffé séparé en tant que réservoir de réserve pour la substance collante.

11. Dispositif selon l'une des revendications 2 à 10, caractérisé en ce que le dispositif chauffant est formé par un élément chauffant tel que ceux qu'on utilise dans un fer à souder.

12. Dispositif selon l'une des revendications précédentes, caractérisé en ce qu'il est prévu un dispositif de réglage avec un capteur de température monté dans la région des surfaces de pressage, pour respecter une température prédéterminée des surfaces de pressage (6 ; 2.1 ; 3.1 ; 2.1', 3.1') ou du récipient chauffé (9).
